# EUROPÄISCHE PATENTSCHRIFT

(11) **EP 2 907 576 B1**
(45) Veröffentlichungstag und Bekanntmachung des Hinweises auf die Patenterteilung: **07.12.2016**
(21) Anmeldenummer: 15153346.0
(22) Anmeldetag: 30.01.2015
(51) Int. Cl.: B01L 9/06, H01L 41/193, G01N 35/04

(54) **TRANSPORTVORRICHTUNG, PROBENVERTEILUNGSSYSTEM UND LABORAUTOMATISIERUNGSSYSTEM**
TRANSPORT DEVICE, SAMPLE DISTRIBUTION SYSTEM AND LABORATORY AUTOMATION SYSTEM
DISPOSITIF DE TRANSPORT, SYSTÈME DE DISTRIBUTION D'ÉCHANTILLONS ET SYSTÈME D'AUTOMATISATION DE LABORATOIRE

(30) Priorität: 17.02.2014 DE 102014202843
(43) Veröffentlichungstag der Anmeldung: 19.08.2015
(73) Patentinhaber: Roche Diagnostics GmbH, 68305 Mannheim (DE); F. Hoffmann-La Roche AG, 4070 Basel (CH)
(72) Erfinder: Riether, Christian, 64367 Mühltal (DE)
(74) Vertreter: Patentanwälte Ruff, Wilhelm, Beier, Dauster & Partner mbB

(56) Entgegenhaltungen:
- EP-A1- 2 148 117
- EP-A1- 2 589 966
- US-A1- 2006 047 303
- US-A1- 2013 153 677

## Beschreibung

### Anwendungsgebiet und Stand der Technik

Die Erfindung betrifft eine Transportvorrichtung zur Aufnahme und Fixierung eines Probenbehälters und zum Transport des Probenbehälters, ein Probenverteilungssystem und ein Laborautomatisierungssystem.

Probenbehälter sind typischerweise längliche, einseitig offene Gefäße aus meist transparentem Glas oder Kunststoff, die zur Aufbewahrung und zum Transport von meist flüssigen Proben verwendet werden. Bei derartigen Proben handelt es sich beispielsweise um Blutproben.

Die WO 2013/064656 A1 zeigt ein Probenverteilungssystem mit einer Anzahl von Transportvorrichtungen bzw. Probenträgern, die jeweils ein magnetisches Element aufweisen. Die Probenträger sind dazu ausgebildet, einen Probenbehälter, beispielsweise in Form eines Probenröhrchens, aufzunehmen. In den Probenbehältern sind zu analysierende Proben, beispielsweise Blutproben, enthalten. Das Probenverteilungssystem weist weiter eine Transporteinrichtung mit einer Transportfläche auf, die dazu ausgebildet ist, die Probenträger zu tragen. Das Probenverteilungssystem weist weiter eine Anzahl von elektromagnetischen Aktuatoren auf, die stationär unter der Transportfläche angeordnet sind. Die elektromagnetischen Aktuatoren sind dazu ausgebildet, einen jeweiligen Probenträger durch Ausüben einer magnetischen Kraft auf der Transportfläche zu bewegen. Eine Steuerungseinrichtung ist dazu ausgebildet, die elektromagnetischen Aktuatoren derart anzusteuern, dass sich ein jeweiliger Probenträger auf der Transportfläche entlang einer vorgebbaren Bewegungsbahn bewegt. Das Probenverteilungssystem dient zum Transportieren der Probenbehälter zwischen unterschiedlichen Stationen eines Laborautomatisierungssystems, wobei eine Bewegungsbahn typisch zwischen den unterschiedlichen Stationen verläuft.

Die EP 2 589 966 A1 offenbar eine Halteeinheit, die die Probe mit Federung hält.

Elektrisch kontraktile Materialien sind bekannt als:
- ein mechanische Stellglieder für einer chirurgische Greifer (US 2006/047303 A1);
- als Stellglied für die Flüssigkeitsabgabe in Tintenstrahldruckvorrichtungen (US 2013/153677 A1);
- als Dichtungsmittel in Flüssigkeit Passagen (EP 2 148 117 A1).

### Aufgabe und Lösung

Es ist eine Aufgabe der Erfindung, eine Transportvorrichtung, ein Probenverteilungssystem und ein Laborautomatisierungssystem vorzusehen, die einfach handhabbar sind.

Dies wird erfindungsgemäß durch eine Transportvorrichtung nach Anspruch 1, ein Probenverteilungssystem nach Anspruch 9 und ein Laborautomatisierungssystem nach Anspruch 13 erreicht. Ausgestaltungen können beispielsweise den Unteransprüchen entnommen werden. Der Wortlaut sämtlicher Ansprüche wird durch ausdrückliche Inbezugnahme zum Inhalt der Beschreibung gemacht.

Die Erfindung betrifft eine Transportvorrichtung zur Aufnahme und Fixierung eines Probenbehälters, insbesondere in Form eines Probenröhrchens. Die Transportvorrichtung kann weiter zum Transportieren des Probenbehälters zwischen präanalytischen, analytischen und/oder postanalytischen Stationen eines Laborautomatisierungssystems dienen. Die Transportvorrichtung kann beispielsweise ein Probenträger sein.

Eine präanalytische Station dient üblicherweise der Vorverarbeitung von Proben bzw. Probenbehältern.

Eine analytische Station kann beispielsweise dazu ausgebildet sein, eine Probe oder einen Teil der Probe und ein Reagenz zu verwenden, um ein messbares Signal zu erzeugen, auf Basis dessen bestimmbar ist, ob und gegebenenfalls in welcher Konzentration der Analyt vorhanden ist.

Eine postanalytische Station dient üblicherweise der Nachverarbeitung von Proben bzw. Probenbehältern.

Die präanalytischen, analytischen und postanalytischen Stationen können beispielsweise mindestens eine Station aus der Menge folgender Stationen aufweisen: eine Kappenentfernungsstation zum Entfernen von Kappen bzw. Verschlüssen auf Probenröhrchen, eine Kappenaufbringstation zum Aufbringen von Kappen bzw. Verschlüssen auf Probenröhrchen, eine Aliquotierstation zum Aliquotieren von Proben, eine Zentrifugierstation zum Zentrifugieren von Proben, eine Archivierstation zum Archivieren von Proben, eine Pipettierstation zum Pipettieren, eine Sortierstation zum Sortieren von Proben bzw. Probenröhrchen, eine Probenröhrchentypbestimmungsstation zum Bestimmen eines Typs eines Probenröhrchens und eine Probenqualitätsbestimmungsstation zum Bestimmen einer Probenqualität.

Die Transportvorrichtung weist mindestens ein magnetisch wirksames Element auf, beispielsweise in Form eines oder mehrerer Permanentmagnete und/oder in Form von ferromagnetischem Material. Das magnetische Element ist dazu ausgebildet, mit einem mittels mindestens eines elektromagnetischen Aktuators erzeugten Magnetfeld derart wechselzuwirken, dass eine Antriebskraft auf die Transportvorrichtung bzw. das magnetisch wirksame Element bewirkt wird. Die Transportvorrichtung weist weiter eine Halteeinheit zum Aufnehmen und lösbaren Fixieren eines Probenbehälters auf.

Die Halteeinheit weist ein Spannfutter bzw. eine Aufnahmevorrichtung oder Haltevorrichtung mit einer oder mehreren Backen auf, d.h. eine Anzahl von Backen beträgt mindestens eins. Die Backe erstreckt sich bzw. die Backen erstrecken sich von einer äußeren, kreisförmigen Umrandung aus radial nach innen. Zwischen der Backe bzw. den Backen ist ein Aufnahmebereich für einen Probenbehälter definiert bzw. gebildet. Die Backe bzw. mindestens eine Backe der Backen ist aus einem elektrisch kontraktilen Material gebildet und derart elektrisch kontaktiert, dass das elektrisch kontraktile Material mit einer Steuerspannung und/oder einem Steuerstrom derart beaufschlagbar ist, dass die aus elektrisch kontraktilem Material gebildete Backe bzw. gebildeten Backen bei einer Beaufschlagung mit dem Steuerstrom und/oder der Steuerspannung unter Erweiterung des Aufnahmebereichs radial nach außen kontrahiert bzw. kontrahieren.

Die äußere Umrandung kann insbesondere auch als räumliche Begrenzung der Halteeinheit und/oder der Transportvorrichtung ausgebildet sein. Beispielsweise kann es sich hierbei um einen umlaufenden Ring handeln.

Der Aufnahmebereich kann beispielsweise auch als Einsteckbereich bezeichnet werden bzw. als solcher dienen. Ein Probenbehälter kann dabei in seiner Längsrichtung bzw. Längserstreckung in den Aufnahmebereich eingeschoben werden. Der Aufnahmebereich kann derjenige Bereich sein, in dem ein Probenbehälter typischerweise aufgenommen ist. Der Aufnahmebereich kann gerade so groß sein, dass er in dem Fall, dass keine Backe kontrahiert ist und sich kein Probenbehälter in dem Aufnahmebereich befindet, geringfügig kleiner ist als ein Durchmesser des Probenbehälters. Damit kann der Probenbehälter mit leichtem Druck aufgrund elastischer Deformation zwischen den Backen gehalten werden, sofern kein Steuerstrom und/oder keine Steuerspannung anliegt. Es kann auch davon gesprochen werden, dass der Aufnahmebereich bzw. Einsteckbereich zwischen den Backen vorhanden oder gebildet ist.

Das Anlegen einer Steuerspannung oder eines Steuerstroms kann beispielsweise derart erfolgen, dass mittels einer Spannungsquelle oder einer Stromquelle eine definierte Spannung angelegt wird bzw. ein definierter Strom durch das elektrisch kontraktile Material geleitet wird.

Mittels der erfindungsgemäßen Transportvorrichtung ist es möglich, einen Probenbehälter unter Verwendung von Magnetfeldern auf einer Transportfläche zu transportieren. Des Weiteren ermöglicht die erfindungsgemäße Ausgestaltung des Spannfutters eine einfache Freigabe bzw. Fixierung eines Probenbehälters, so dass dieser einfach automatisiert in die Transportvorrichtung aufgenommen und aus dieser entfernt werden kann. Hierzu ist lediglich das An- bzw. Abschalten eines Steuerstroms und/oder einer Steuerspannung notwendig.

Das elektrisch kontraktile Material kann auch als Aktuator für andere Arten von Spannbacken benutzt werden, d.h. das elektrisch kontraktile Material schiebt/drückt beispielsweise Gummiklötzchen an den Probenbehälter oder beeinflusst den Winkel von mechanischen Hebeln.

Gemäß einer Ausführung sind alle Backen des Spannfutters aus elektrisch kontraktilem Material gebildet und elektrisch kontaktiert, wobei die jeweiligen Backen bei einer Beaufschlagung mit dem Steuerstrom und/oder der Steuerspannung unter Erweiterung des Aufnahmebereichs radial nach außen kontrahieren. Die Backen können in diesem Fall gleichmäßig radial nach außen kontrahieren. Damit kann eine gleichmäßige Erweiterung des Aufnahmebereichs erreicht werden, was die Handhabung vereinfacht und mehr Platz für ein Aufnehmen und/oder Entfernen eines Probenbehälters zur Verfügung stellt.

Gemäß einer Ausführung weist das Spannfutter lediglich eine einzelne Backe auf, die als Ring gebildet ist. Alternativ hierzu kann das Spannfutter beispielsweise zwei, drei, vier, fünf oder sechs voneinander getrennte Backen aufweisen. Es sei verstanden, dass für unterschiedliche Probenbehälter und unterschiedliche Einsatzzwecke jeweils geeignete Anzahlen von Backen vorteilhaft sein können.

Bei dem elektrisch kontraktilen Material kann es sich um ein elektroaktives Polymer, ein Gel eines elektroaktiven Polymers, ein magnetoaktives Polymer, ein Gel eines magnetoaktiven Polymers oder ein Material, das einen piezoelektrischen Effekt zeigt, handeln. Unter einem Gel wird dabei insbesondere ein feindisperses System aus mindestens einer festen und einer flüssigen Phase verstanden. Elektrisch kontraktile Materialien sind beispielsweise Polyacrylnitril-Polypyrrol (PAN-PPY), Polyvinylalkohol (PVA), Polyvinylidenfluorid (PVDS), ein Acrylmaterial oder ein Gel aus solchen Materialien.

Die aus elektrisch kontraktilem Material gebildeten Backen können jeweils mittels zweier Elektroden elektrisch kontaktiert sein. Mindestens eine Elektrode kann umlaufend sein, so dass diese mehrere Backen gleichzeitig kontaktiert. Damit kann in einfacher Weise ein identisches Bezugspotential für mehrere Backen bewirkt werden.

Die Transportvorrichtung kann einen ersten und einen zweiten elektrischen Kontaktbereich aufweisen, wobei der erste und der zweite elektrische Kontaktbereich mit den aus elektrisch kontraktilem Material ausgebildeten Backen elektrisch kontaktiert sind. Der erste und der zweite elektrische Kontaktbereich können außenseitig bzw. umfangsseitig der Transportvorrichtung gebildet sein. Dies ermöglicht eine einfache Kontaktierung mittels geeigneter Vorrichtungen, beispielsweise Elektroden zum Kontaktieren der elektrischen Kontaktbereiche an geeigneten Stellen, welche beispielsweise zum Be- und Entladen der Transportvorrichtung vorgesehen sind.

Bevorzugt sind der erste und der zweite elektrische Kontaktbereich als horizontal um die Transportvorrichtung umlaufende, elektrisch leitende Streifen ausgebildet, wobei der erste elektrische Kontaktbereich von dem zweiten elektrischen Kontaktbereich in vertikaler Richtung beabstandet ist. Dies ermöglicht eine elektrische Kontaktierung der elektrischen Kontaktbereiche unabhängig von der aktuellen Ausrichtung der Transportvorrichtung.

Gemäß einer Ausführung sind zumindest die aus einem elektrisch kontraktilen Material ausgebildeten Backen mit einer Schicht aus Silikon überzogen. Dies kann insbesondere dann vorteilhaft sein, wenn das elektrisch kontraktile Material selbst nicht oder nur schwer gereinigt werden kann. Die Silikonschicht erlaubt gerade in diesem Fall ein einfaches Säubern der jeweiligen Backe und verhindert ein Eindringen von Wasser oder anderer Reinigungsflüssigkeit in das elektrisch kontraktile Material. Es sei verstanden, dass eine jeweilige Backe ganz oder teilweise mit der Schicht aus Silikon überzogen sein kann.

Die Erfindung betrifft des Weiteren ein Probenverteilungssystem, welches Folgendes aufweist: eine Anzahl von erfindungsgemäßen Transportvorrichtungen, eine ebene, horizontal ausgerichtete Transportfläche, die dazu ausgebildet ist, die Transportvorrichtungen zu tragen, eine Anzahl von elektromagnetischen Aktuatoren, die stationär unter der Transportfläche angeordnet sind, wobei die elektromagnetischen Aktuatoren dazu ausgebildet sind, eine Transportvorrichtung, die auf der Transportfläche angeordnet ist, durch Ausüben einer magnetischen Kraft auf die Transportvorrichtung zu bewegen, und eine Steuerungseinrichtung, die dazu ausgebildet ist, die elektromagnetischen Aktuatoren derart anzusteuern, dass sie eine jeweilige Transportvorrichtung auf der Transportfläche entlang einer vorgebbaren Bewegungsbahn bewegt.

Mittels des erfindungsgemäßen Probenverteilungssystems können die weiter oben erwähnten Vorteile der erfindungsgemäßen Transportvorrichtung für ein Probenverteilungssystem nutzbar gemacht werden. Hinsichtlich der Transportvorrichtung kann auf alle weiter oben beschriebenen Ausführungen zurückgegriffen werden. Erläuterte Vorteile gelten entsprechend.

Bei der Steuerungseinrichtung kann es sich beispielsweise um einen Computer, einen Prozessor oder um eine andere elektronische Steuervorrichtung handeln. Die Steuerungseinrichtung kann Prozessormittel und Speichermittel aufweisen, wobei in den Speichermitteln Programmcode gespeichert ist, welcher das Verhalten der Prozessormittel steuert.

Das Probenverteilungssystem kann eine mittels der Steuerungseinrichtung angesteuerte Handhabestation zum Beladen und/oder Entladen einer jeweiligen Transportvorrichtung aufweisen. Die Handhabestation weist einen ersten und einen zweiten elektrischen Kontakt auf, der zum Herstellen einer elektrischen Verbindung mit der Transportvorrichtung bzw. deren erstem und zweitem elektrischen Kontaktbereich dient. Die Handhabestation weist weiter einen Greifer auf, der zum Handhaben eines in der Transportvorrichtung aufgenommenen oder aufzunehmenden Probenbehälters dient.

Mittels der elektrischen Kontakte der Handhabestation können entsprechende elektrische Kontaktbereiche der Transportvorrichtung elektrisch kontaktiert werden. Beispielsweise kann es sich dabei um die weiter oben beschriebenen umlaufenden Kontaktbereiche handeln. Dabei kann es in diesem Fall genügen, lediglich einen schmalen stationären Kontakt zum Kontaktieren eines jeweiligen umlaufenden Kontaktbereichs auf der Transportvorrichtung vorzusehen. Dies kann insbesondere bei einer runden Transportvorrichtung die Handhabung vereinfachen, da nicht auf die radiale Orientierung der Transportvorrichtung geachtet werden muss.

Erfindungsgemäß kann in besonders einfacher Weise vollautomatisiert ein Probenbehälter in eine Transportvorrichtung eingesetzt werden. Durch den erweiterten Aufnahmebereich, der mittels der Steuerspannung und/oder des Steuerstroms und des elektrisch kontraktilen Materials bewirkt wird, wird das Einsetzen des Probenbehälters durch den Greifer vereinfacht. Damit können Toleranzen leichter ausgeglichen werden. Anschließend kann durch einfaches Abschalten der Steuerspannung und/oder des Steuerstroms der Probenbehälter zuverlässig in der Transportvorrichtung gehalten werden.

Die Transportvorrichtung kann rotationssymmetrisch ausgeführt sein. Dies erlaubt eine einfache Herstellung und vermeidet ferner eine Vorzugsrichtung, so dass die Transportvorrichtung unter Verwendung von Magnetfeldern zweidimensional auf der Transportfläche bewegt werden kann, ohne dass auf eine momentane Orientierung der Transportvorrichtung Rücksicht genommen werden muss.

Gemäß einer Ausführung ist in einer Transportvorrichtung ein Probenbehälter aufgenommen, dessen Durchmesser größer ist als ein Durchmesser des Aufnahmebereichs ohne anliegenden Stromfluss. Damit kann der Probenbehälter in geeigneter Weise unter leichtem Druck aufgrund elastischer Deformation der Backen in der Transportvorrichtung gehalten werden, was beispielsweise ein unbeabsichtigtes Herausfallen oder Umkippen des Probenbehälters vermeiden kann.

Die Steuerungseinrichtung kann zum Entladen eines Probenbehälters dazu ausgebildet sein, diejenige Transportvorrichtung, in der der zu entladende Probenbehälter aufgenommen ist, mittels Ansteuern der elektromagnetischen Aktuatoren zu der Handhabestation zu bewegen, den Greifer derart anzusteuern, dass der Probenbehälter von dem Greifer gehalten wird, die mindestens eine aus elektrisch kontraktilem Material gebildete Backe der Transportvorrichtung mit einer Steuerspannung und/oder einem Steuerstrom zu beaufschlagen, so dass diese den Aufnahmebereich aufweitet, und schließlich den Greifer derart anzusteuern, dass der Probenbehälter aus der Transportvorrichtung entnommen wird und beispielsweise einer präanalytischen, analytischen und/oder postanalytischen Station zur weiteren Be-/Verarbeitung zugeführt wird.

Die Steuerungseinrichtung kann zum Beladen eines Probenbehälters dazu ausgebildet sein, eine Transportvorrichtung, die mit einem Probenbehälter zu beladen ist, mittels Ansteuern der elektromagnetischen Aktuatoren zu der Handhabestation zu bewegen, die mindestens eine aus elektrisch kontraktilem Material gebildete Backe der Transportvorrichtung mit einer Steuerspannung und/oder einem Steuerstrom zu beaufschlagen, so dass diese den Aufnahmebereich aufweitet, den Greifer derart anzusteuern, dass der Probenbehälter entlang seiner Längserstreckung von dem Greifer in den Aufnahmebereich eingeführt wird, die Steuerspannung und/oder den Steuerstrom zu deaktivieren, so dass die Transportvorrichtung ihren Aufnahmebereich verengt, und schließlich den Greifer derart anzusteuern, dass dieser den Probenbehälter freigibt, so dass die Transportvorrichtung auf der Transportfläche verfahrbar ist.

Ein Laborautomatisierungssystem kann eine Anzahl von präanalytischen, analytischen und/oder postanalytischen Stationen aufweisen, die dazu ausgebildet sind, Probenbehälter und/oder Proben, die in den Probenbehältern enthalten sind, zu bearbeiten, und ein oben genanntes Probenverteilungssystem zum Transportieren der Probenbehälter zwischen den präanalytischen, analytischen und/oder postanalytischen Stationen aufweisen.

### Kurze Beschreibung der Zeichnungen

Die Erfindung wird nachfolgend unter Bezugnahme auf die Zeichnungen detailliert beschrieben. Hierbei zeigen schematisch:
- Fig. 1: eine seitliche Schnittansicht einer Transportvorrichtung gemäß einer Ausführungsform,
- Fig. 2: eine Draufsicht auf die Transportvorrichtung von Fig. 1,
- Fig. 3: eine Draufsicht auf eine Transportvorrichtung gemäß einer weiteren Ausführungsform,
- Fig. 4: eine Draufsicht auf eine Transportvorrichtung gemäß einer weiteren Ausführungsform,
- Fig. 5: ein Probenverteilungssystem.

### Detaillierte Beschreibung der Ausführungsbeispiele

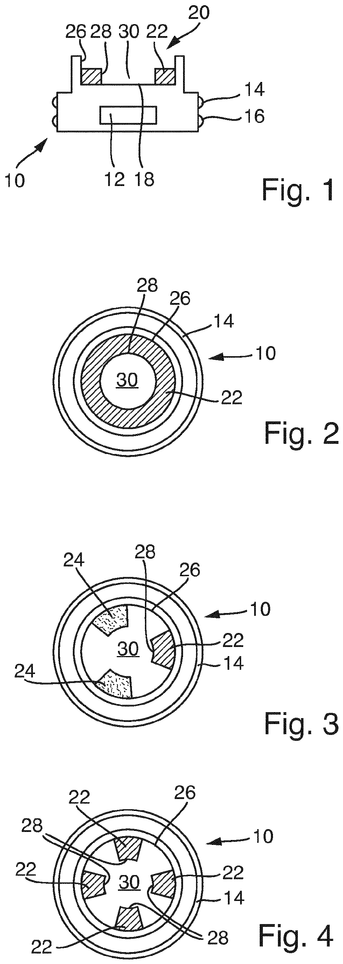

Die Fig. 1 und 2 zeigen eine Transportvorrichtung 10 gemäß einer ersten Ausführungsform. Fig. 1 zeigt eine seitliche Schnittansicht, wohingegen Fig. 2 eine Draufsicht auf die Transportvorrichtung 10 zeigt.

Die Transportvorrichtung 10 ist vorliegend radialsymmetrisch ausgeführt. Sie hat in etwa die Form eines Pucks. An ihrer Unterseite ist sie flächig, so dass sie in geeigneter Weise auf einer Transportfläche aufliegen und über diese gleiten kann.

In der Transportvorrichtung 10 befindet sich ein magnetisch wirksames Element in Form eines Permanentmagneten 12, der es ermöglicht, dass die Transportvorrichtung 10 durch ein externes Magnetfeld auf der Transportfläche bewegt wird.

Seitlich an der Transportvorrichtung 10 befinden sich ein erster elektrischer Kontaktbereich 14 und ein zweiter elektrischer Kontaktbereich 16, die als umlaufende elektrisch leitfähige Streifen gebildet sind. Dies ermöglicht eine umlaufende Kontaktierung der elektrischen Kontaktbereiche 14, 16 drehwinkelunabhängig.

An einer Oberseite der Transportvorrichtung 10 ist eine Ausnehmung 18 vorgesehen. In der Ausnehmung 18 befindet sich ein Spannfutter 20, das zum Aufnehmen und Halten eines Probenbehälters vorgesehen ist.

Das Spannfutter 20 weist eine radial umlaufende Backe 22 auf. Diese ist aus elektrisch kontraktilem Material gebildet. Radial außerhalb der Backe 22 ist eine radial umlaufende erste Elektrode 26 angeordnet. Diese kontaktiert die Backe 22 von außen. Innerhalb der Backe 22 ist eine ebenfalls radial umlaufende zweite Elektrode 28 angeordnet, welche das elektrisch kontraktile Material der Backe 22 von innen kontaktiert.

Die erste Elektrode 26 ist mit dem ersten elektrischen Kontaktbereich 14 verbunden. Die zweite Elektrode 28 ist mit dem zweiten elektrischen Kontaktbereich 16 verbunden. Dies ermöglicht es, zwischen den Elektroden 26, 28 eine Spannung anzulegen und/oder einen Strom zu bewirken, welche bzw. welcher durch die Backe 22 radial anliegt bzw. fließt.

Innerhalb der Backe 22 ist ein Aufnahmebereich 30 gebildet, in den ein Probenbehälter eingebracht werden kann. Der Aufnahmebereich 30 ist dabei so groß, dass er in einem Zustand, in dem kein Strom und keine Spannung bewirkt sind, geringfügig kleiner ist als ein Durchmesser eines aufzunehmenden Probenbehälters. Damit übt die Backe 22 auf einen aufgenommenen Probenbehälter aufgrund elastischer Deformation eine radiale Fixierkraft aus, die ein unbeabsichtigtes Entfernen oder ein Umkippen verhindert. Die Grenzfläche der Backe 22 zum Aufnahmebereich 30 ist mit Silikon überzogen, um eine bessere Reinigung zu ermöglichen.

Wenn an die elektrischen Kontaktbereiche 14, 16 von außen eine Spannung angelegt wird, zieht sich das elektrisch kontraktile Material der Backe 22 zusammen. Dies vergrößert den Aufnahmebereich 30. Ein solcher Zustand kann beispielsweise verwendet werden, um die Transportvorrichtung 10 mit einem Probenbehälter zu beladen oder um den Probenbehälter zu entnehmen.

Fig. 3 zeigt ein weiteres Ausführungsbeispiel, bei dem nicht nur eine einzelne Backe 22 aus elektrisch kontraktilem Material vorgesehen ist, sondern zusätzlich noch zwei weitere Backen 24 vorhanden sind, die aus nicht elektrisch kontraktilem Material bestehen. Die drei Backen 22, 24 sind kreisförmig um jeweils 120° zueinander gedreht angeordnet und nehmen jeweils nur ein Kreisbogensegment ein. Die aus elektrisch kontraktilem Material bestehende Backe 22 ist nicht umlaufend.

Durch Anlegen einer Spannung oder eines Stroms, wie bereits mit Bezug auf die Fig. 1 und 2 beschrieben, zieht sich die aus elektrisch kontraktilem Material bestehende Backe 22 zusammen und vergrößert damit den Aufnahmebereich 30. Dies führt trotz der gleichbleibenden Form der beiden nicht aus elektrisch kontraktilem Material bestehenden Backen 24 zur Möglichkeit eines erleichterten Einbringens bzw. Herausnehmens eines Probenbehälters.

Fig. 4 zeigt eine weitere Ausführungsform einer Transportvorrichtung 10. Die Transportvorrichtung 10 weist gemäß Fig. 4 insgesamt vier Backen 22 jeweils aus elektrisch kontraktilem Material auf. Jede Backe 22 ist durch eine außenseitig umlaufende erste Elektrode 26 und durch eine jeweilige innere, dem Aufnahmebereich 30 zugeordnete zweite Elektrode 28 elektrisch kontaktiert.

Bei Anlegen einer elektrischen Spannung oder eines elektrischen Stroms an die Backen 22 ziehen sich diese gleichmäßig zusammen. Dies vergrößert den Aufnahmebereich 30 gleichmäßig. Damit kann in vorteilhafter Weise mehr Raum zum Be- und Entladen der Transportvorrichtung 10 zur Verfügung gestellt werden.

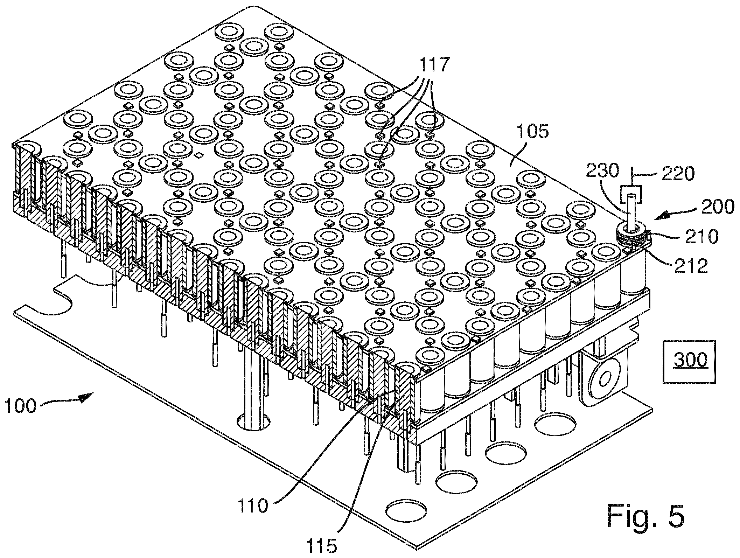

Fig. 5 zeigt ein Probenverteilungssystem 100. Das Probenverteilungssystem 100 weist eine Transportfläche 105 auf, auf der Transportvorrichtungen 10, beispielsweise gemäß einem der weiter oben beschriebenen Ausführungsbeispiele, bewegt werden. Unterhalb der Transportfläche 105 befindet sich eine Anzahl von Elektromagneten 110 mit jeweiligen ferromagnetischen Kernen 115. Diese sind durch eine Steuerungseinrichtung 300 einzeln ansteuerbar, so dass eine jeweilige Transportvorrichtung 10 mittels ihres jeweiligen Permanentmagneten 12 aufgrund der durch die Spulen 110 erzeugten Magnetfelder über die Transportfläche 105 entlang einer vorgegebenen Bahn bewegt werden kann. Zum Ermitteln der jeweiligen Position einer Transportvorrichtung 10 sind auf der Oberfläche 105 außerdem eine Anzahl von Hall-Sensoren 117 angeordnet, welche das von den jeweiligen Permanentmagneten 12 erzeugte Magnetfeld detektieren und die entsprechende Position der Transportvorrichtung 10 an die Steuerungseinrichtung 300 melden können.

Das Probenverteilungssystem 100 ist Bestandteil eines Laborautomatisierungssystems mit einer Anzahl von nicht näher dargestellten präanalytischen, analytischen und postanalytischen Stationen, die angrenzend an die Transportfläche 105 angeordnet sind. Das Probenverteilungssystem 100 dient zum Transportieren der Probenbehälter zwischen diesen Stationen.

Das Probenverteilungssystem 100 weist ferner eine Handhabestation 200 zum Be- und Entladen einer Transportvorrichtung 10 auf. Die Handhabestation 200 weist einen ersten stationären elektrischen Kontakt 210 und einen zweiten stationären elektrischen Kontakt 212 auf. Die stationären elektrischen Kontakte 210, 212 sind in einem Eckbereich der Transportfläche 105 vorgesehen und dienen gleichzeitig als Anschlag für eine Transportvorrichtung 10. Dabei ist der erste elektrische Kontakt 210 auf einer solchen Höhe angeordnet, dass er bei einer sich in der Station 200 befindlichen Transportvorrichtung 10 den ersten elektrischen Kontaktbereich 14 kontaktiert. Der zweite stationäre elektrische Kontakt 212 ist so angeordnet, dass er bei einer sich in der Handhabestation 200 befindlichen Transportvorrichtung 10 den zweiten elektrischen Kontaktbereich 16 kontaktiert. Da die elektrischen Kontaktbereiche 14, 16 umlaufend ausgebildet sind, spielt es keine Rolle, welche Drehstellung die Transportvorrichtung 10 aufweist.

Es sei verstanden, dass die Kontakte 210, 212 und die Transportvorrichtung 10 hier lediglich schematisch dargestellt sind.

Die Handhabestation 200 weist weiter einen Greifer 220 auf, der dazu ausgebildet ist, einen Probenbehälter 230 in einen Aufnahmebereich 30 einer jeweiligen Transportvorrichtung 10 einzubringen oder aus diesem zu entnehmen. Dies ermöglicht ein automatisiertes Be- und Entladen einer Transportvorrichtung 10 mit einem Probenbehälter 230. Der Greifer 220 ist hier ebenfalls lediglich schematisch dargestellt.

Die Steuerungseinrichtung 300 ist dazu ausgebildet, eine Transportvorrichtung 10, die beladen oder entladen werden soll, mittels der elektromagnetischen Aktuatoren 110 zu der Handhabestation 200 zu fahren. Dort wird sie von dem unter der Station 200 befindlichen elektromagnetischen Aktuator 110 gehalten. Anschließend legt die Steuerungseinrichtung 300 mittels der stationären elektrischen Kontakte 210, 212 eine Spannung an die aus elektrisch kontraktilem Material gebildete Backen 22 der Transportvorrichtung 10 an. Dadurch erweitert sich der Aufnahmebereich 30, und die Steuerungseinrichtung 300 kann den Greifer 220 betätigen, um einen Probenbehälter 230 in die Transportvorrichtung 10 einzusetzen oder aus dieser zu entnehmen.

Durch das gezeigte Probenverteilungssystem können Be- und Entladevorgänge sowie Transportvorgänge, welche gemäß dem Stand der Technik unter Einsatz komplizierter Apparaturen oder manuell durchzuführen waren, mit einfachem apparativen Aufwand und vollautomatisch durchgeführt werden. Damit werden Zeit und Kosten gespart und Bedienfehler vermieden.

Die gezeigten Ausführungsbeispiele von Transportvorrichtungen können mit einem Probenverteilungssystem verwendet werden, wie es in der WO 2013/064656 A1 beschrieben ist. Die Transportvorrichtungen bilden hierbei die Probenträger. Die Transportvorrichtungen, das Probenverteilungssystem und eine Anzahl von präanalytischen, analytischen und /oder postanalytischen Stationen können ein Laborautomatisierungssystem bilden.

## Patentansprüche

1. Transportvorrichtung (10) zur Aufnahme und Fixierung eines Probenbehälters (230) und zum Transportieren des Probenbehälters (230) zwischen präanalytischen, analytischen und/oder postanalytischen Stationen eines Laborautomatisierungssystems, aufweisend:
- mindestens ein magnetisch wirksames Element (12), das dazu ausgebildet ist, mit einem mittels mindestens eines elektromagnetischen Aktuators (110) erzeugten Magnetfeld derart wechselzuwirken, dass eine Antriebskraft auf die Transportvorrichtung (10) bewirkt wird, und
- eine Halteeinheit, aufweisend:
- ein Spannfutter (20) mit einer Anzahl von Backen (22, 24),
- wobei sich die Backen (22, 24) von einer äußeren Umrandung aus radial nach innen erstrecken und wobei zwischen den Backen (22, 24) ein Aufnahmebereich (30) für den Probenbehälter (230) gebildet ist, und
- wobei mindestens eine Backe (22) der Backen (22, 24) aus einem elektrisch kontraktilen Material gebildet ist und derart elektrisch kontaktiert ist, dass das elektrisch kontraktile Material mit einer Steuerspannung und/oder einem Steuerstrom beaufschlagbar ist, wobei die mindestens eine aus elektrisch kontraktilem Material gebildete Backe (22) bei einer Beaufschlagung mit dem Steuerstrom und/oder der Steuerspannung unter Erweiterung des Aufnahmebereichs (30) radial nach außen kontrahiert.

2. Transportvorrichtung (10) nach Anspruch 1, **dadurch gekennzeichnet, dass**
- alle Backen (22) des Spannfutters (20) aus elektrisch kontraktilem Material gebildet sind und elektrisch kontaktiert sind, wobei die jeweiligen Backen (22) bei einer Beaufschlagung mit dem Steuerstrom und/oder der Steuerspannung unter Erweiterung des Aufnahmebereichs (30) radial nach außen kontrahieren.

3. Transportvorrichtung (10) nach Anspruch 1 oder 2, **dadurch gekennzeichnet, dass**
- das Spannfutter (20) eine Anzahl von zwei, drei, vier, fünf oder sechs Backen (22, 24) aufweist, oder
- das Spannfutter (20) lediglich eine einzelne Backe (22) aufweist, die als Ring ausgebildet ist.

4. Transportvorrichtung (10) nach einem der vorhergehenden Ansprüche, **dadurch gekennzeichnet, dass**
- das elektrisch kontraktile Material ein elektroaktives Polymer, ein Gel eines elektroaktiven Polymers, ein magnetoaktives Polymer, ein Gel eines magnetoaktiven Polymers oder ein Material, das einen piezoelektrischen Effekt zeigt, ist.

5. Transportvorrichtung (10) nach einem der vorhergehenden Ansprüche, **dadurch gekennzeichnet, dass**
- das elektrisch kontraktile Material Polyacrylnitril-Polypyrrol (PAN-PPY), Polyvinylalkohol (PVA), Polyvinylidenfluorid (PVDS), ein Acrylmaterial oder ein Gel aus solchen Materialien ist.

6. Transportvorrichtung (10) nach einem der vorhergehenden Ansprüche, **dadurch gekennzeichnet, dass**
- die mindestens eine aus elektrisch kontraktilem Material gebildete Backe (22) mittels zweier Elektroden (26, 28) elektrisch kontaktiert ist.

7. Transportvorrichtung (10) nach einem der vorhergehenden Ansprüche, **gekennzeichnet durch**
- einen ersten und einen zweiten elektrischen Kontaktbereich (14, 16), wobei der erste und der zweite elektrische Kontaktbereich (14, 16) mit der mindestens einen aus elektrisch kontraktilem Material gebildeten Backe (22) elektrisch verbunden sind.

8. Transportvorrichtung (10) nach Anspruch 7, **dadurch gekennzeichnet, dass**
- der erste und der zweite elektrische Kontaktbereich (14, 16) als horizontal um die Transportvorrichtung (10) umlaufende elektrisch leitfähige Streifen ausgebildet sind.

9. Probenverteilungssystem (100), aufweisend:
- eine Anzahl von Transportvorrichtungen (10) nach einem der vorhergehenden Ansprüche,
- eine Transportfläche (105), die dazu ausgebildet ist, die Transportvorrichtung (10) zu tragen,
- eine Anzahl von elektromagnetischen Aktuatoren (110), die stationär unter der Transportfläche (105) angeordnet sind, wobei die elektromagnetischen Aktuatoren (110) dazu ausgebildet sind, eine Transportvorrichtung (10), die auf der Transportfläche (105) angeordnet ist, durch Ausüben einer magnetischen Kraft auf die Transportvorrichtung (10) zu bewegen, und
- eine Steuerungseinrichtung (300), die dazu ausgebildet ist, die elektromagnetischen Aktuatoren (110) derart anzusteuern, dass sich eine jeweilige Transportvorrichtung (10) auf der Transportfläche (105) entlang einer vorgebbaren Bewegungsbahn bewegt.

10. Probenverteilungssystem (100) nach Anspruch 9, **gekennzeichnet durch**
- eine mittels der Steuerungseinrichtung (300) angesteuerte Handhabestation (200) zum Beladen und/oder Entladen einer Transportvorrichtung (10), aufweisend:
- einen ersten und einen zweiten elektrischen Kontakt (210, 212) zum Herstellen einer elektrischen Verbindung mit der Transportvorrichtung (10), und
- einen Greifer (220) zum Handhaben eines in der Transportvorrichtung (10) aufgenommenen oder aufzunehmenden Probenbehälters (230).

11. Probenverteilungssystem nach Anspruch 10, **dadurch gekennzeichnet, dass**
- die Steuerungseinrichtung (300) dazu ausgebildet ist,
- eine Transportvorrichtung (10), in der ein zu entladender Probenbehälter (230) aufgenommen ist, mittels Ansteuern der elektromagnetischen Aktuatoren (110) zu der Handhabestation (200) zu bewegen,
- den Greifer (220) derart anzusteuern, dass der Probenbehälter (230) von dem Greifer (220) gehalten wird,
- die mindestens eine aus elektrisch kontraktilem Material gebildete Backe (22) der Transportvorrichtung (10) mit einer Steuerspannung und/oder einem Steuerstrom zu beaufschlagen, und
- den Greifer (220) derart anzusteuern, dass der Probenbehälter (230) aus der Transportvorrichtung (10) entnommen wird.

12. Probenverteilungssystem nach Anspruch 10 oder 11, **dadurch gekennzeichnet, dass**
- die Steuerungseinrichtung (300) dazu ausgebildet ist,
- eine Transportvorrichtung (10), die mit einem Probenbehälter (230) zu beladen ist, mittels Ansteuern der elektromagnetischen Aktuatoren (110) zu der Handhabestation (200) zu bewegen,
- die mindestens eine aus elektrisch kontraktilem Material gebildete Backe (22) der Transportvorrichtung (10) mit einer Steuerspannung und/oder einem Steuerstrom zu beaufschlagen,
- den Greifer (220) derart anzusteuern, dass der Probenbehälter (230) von dem Greifer (220) in den Aufnahmebereich (30) eingeführt wird,
- die Steuerspannung und/oder den Steuerstrom zu deaktivieren und
- den Greifer (220) derart anzusteuern, dass dieser den Probenbehälter (230) freigibt.

13. Laborautomatisierungssystem, aufweisend:
- eine Anzahl von präanalytischen, analytischen und/oder postanalytischen Stationen, die dazu ausgebildet sind, Probenbehälter und/oder Proben, die in den Probenbehältern enthalten sind, zu bearbeiten, und
- ein Probenverteilungssystem zum Transportieren der Probenbehälter zwischen den präanalytischen, analytischen und/oder postanalytischen Stationen nach einem der Ansprüche 9 bis 12.

## Claims

1. Transport device (10) for receiving and fixing a sample container (230) and for transporting the sample container (230) between pre-analytical, analytical and/or post-analytical stations of a laboratory automation system, the transport device (10) comprising:
- at least one magnetically active element (12), which is configured to interact with a magnetic field generated by means of at least one electromagnetic actuator (110) such that a driving force is applied to the transport device (10), and
- a holding unit, comprising:
- a chuck (20) having a number of jaws (22, 24),
- wherein the jaws (22, 24) extend radially inwardly from an outer edge, wherein a receiving area (30) for the sample container (230) is formed between the jaws (22, 24), and
- wherein at least one jaw (22) of the jaws (22, 24) is formed from an electrically contractile material and is electrically contacted in such a way that a control voltage and/or a control current can be applied to the electrically contractile material, wherein the at least one jaw (22) formed from electrically contractile material contracts radially outwardly thereby expanding the receiving area (30) when the control current and/or the control voltage is applied.

2. Transport device (10) according to claim 1, **characterized in that**
- all jaws (22) of the chuck (20) are formed from electrically contractile material and are electrically contacted, wherein the respective jaws (22) contract radially outwardly thereby expanding the receiving area (30) when the control current and/or the control voltage is applied.

3. Transport device (10) according to claim 1 or 2, **characterized in that**
- the chuck (20) has a number of two, three, four, five or six jaws (22, 24), or
- the chuck (20) has exactly one individual jaw (22), which is formed as a ring.

4. Transport device (10) according to any of the preceding claims, **characterized in that**
- the electrically contractile material is an electroactive polymer, a gel of an electroactive polymer, a magnetoactive polymer, a gel of a magnetoactive polymer, or a material that demonstrates a piezoelectric effect.

5. Transport device (10) according to any of the preceding claims, **characterized in that**
- the electrically contractile material is polyacrylonitrile-polypyrrole (PAN-PPY), polyvinyl alcohol (PVA), polyvinylidene fluoride (PVDS), an acrylic material or a gel formed from such materials.

6. Transport device (10) according to any of the preceding claims, **characterized in that**
- the at least one jaw (22) formed from electrically contractile material is electrically contacted by means of two electrodes (26, 28).

7. Transport device (10) according to any of the preceding claims, **characterized by**
- a first and a second electrical contact area (14, 16), wherein the first and the second electrical contact areas (14, 16) are electrically connected to the at least one jaw (22) formed from electrically contractile material.

8. Transport device (10) according to claim 7, **characterized in that**
- the first and the second electrical contact areas (14, 16) are formed as electrically conductive strips running horizontally around the transport device (10).

9. Sample distribution system (100), comprising:
- a number of transport devices (10) according to any of the preceding claims,
- a transport surface (105), which is configured to carry the transport device (10),
- a number of electromagnetic actuators (110), which are arranged in a stationary manner below the transport surface (105), wherein the electromagnetic actuators (110) are configured to move a transport device (10), which is arranged on the transport surface (105), by applying a magnetic force to the transport device (10), and
- a control device (300), which is configured to activate the electromagnetic actuators (110) such that a respective transport device (10) moves on the transport surface (105) along a predefinable movement path.

10. Sample distribution system (100) according to claim 9, **characterized by**
- a handling station (200) controlled by the control device (300) for loading and/or unloading a transport device (10), wherein the handling station (200) comprises:
- a first and a second electrical contact (210, 212) for establishing an electrical connection to the transport device (10), and
- a gripper (220) for handling a sample container (230) received or to be received in the transport device (10).

11. Sample distribution system according to claim 10, **characterized in that**
- the control device (300) is configured
- to move a transport device (10), in which a sample container (230) is received that is to be unloaded, to the handling station (200) by means of activation of the electromagnetic actuators (110),
- to activate the gripper (220) in such a way that the sample container (230) is held by the gripper (220),
- to apply a control voltage and/or a control current to the at least one jaw (22) of the transport device (10) formed from electrically contractile material, and
- to activate the gripper (220) in such a way that the sample container (230) is removed from the transport device (10).

12. Sample distribution system according to claim 10 or 11, **characterized in that**
- the control device (300) is configured
- to move a transport device (10), which is to be loaded with a sample container (230), to the handling station (200) by means of activation of the electromagnetic actuators (110),
- to apply a control voltage and/or a control current to the at least one jaw (22) of the transport device (10) formed from electrically contractile material,
- to activate the gripper (220) in such a way that the sample container (230) is introduced by the gripper (220) into the receiving area (30),
- to deactivate the control voltage and/or the control current, and
- to activate the gripper (220) in such a way that the latter releases the sample container (230).

13. Laboratory automation system, comprising:
- a number of pre-analytical, analytical and/or post-analytical stations, which are configured to process sample containers and/or samples contained in the sample containers, and
- a sample distribution system for transporting the sample containers between the pre-analytical, analytical and/or post-analytical stations according to any of claims 9 to 12.

## Revendications

1. Dispositif de transport (10) destiné à recevoir et à fixer un récipient d'échantillons (230) et à transporter le récipient d'échantillons (230) entre des postes de pré-analyse, d'analyse et/ou de post-analyse d'un système d'automatisation de laboratoire, comportant :
- au moins un élément (12) à effet magnétique, qui est conçu pour interagir avec un champ magnétique généré par le biais d'au moins un actionneur (110) électromagnétique, de sorte qu'une force d'entraînement soit exercée sur le dispositif de transport (10) et
- une unité de retenue, comportant :
- un mandrin de serrage (20) avec un nombre de mâchoires (22, 24),
- les mâchoires (22, 24) s'étendant à partir d'une bordure extérieure, en direction radiale vers l'intérieur et entre les mâchoires (22, 24) étant formée une zone de réception (30) pour les récipients d'échantillons (230) et
- au moins une mâchoire (22) parmi les mâchoires (22, 24) étant formée en une matière électriquement contractile et étant en contact électrique de telle sorte que la matière électriquement contractile puisse être soumise à une tension de commande et/ou à un courant de commande, lors d'une soumission au courant de commande et/ou à la tension de commande, l'au moins une mâchoire (22) formée en une matière électriquement contractile se contractant en direction radiale vers l'extérieur, en élargissant la zone de réception (30).

2. Dispositif de transport (10) selon la revendication 1, **caractérisé en ce que**
- toutes les mâchoires (22) du mandrin de serrage (20) sont formées dans une matière électriquement contractile et sont en contact électrique, lors d'une soumission au courant de commande et/ou à la tension de commande, les mâchoires (22) respectives se contractant en direction radiale vers l'extérieur, en élargissant la zone de réception (30).

3. Dispositif de transport (10) selon la revendication 1 ou la revendication 2, **caractérisé en ce que**
- le mandrin de serrage (20) comporte un nombre de deux, trois, quatre, cinq ou six mâchoires (22, 24) ou
- le mandrin de serrage (20) ne comporte qu'une seule mâchoire (22) qui est conçue sous la forme d'une bague.

4. Dispositif de transport (10) selon l'une quelconque des revendications précédentes, **caractérisé en ce que**
- la matière électriquement contractile est un polymère électro-actif, un gel d'un polymère électro-actif, un polymère magnéto-actif, un gel d'un polymère magnéto-actif ou une matière faisant preuve d'un effet piézoélectrique.

5. Dispositif de transport (10) selon l'une quelconque des revendications précédentes, **caractérisé en ce que**
- la matière électriquement contractile est un polyacrylonitrile-polypyrrole (PAN-PPY), un alcool polyvinylique (PVA), un fluorure de polyvinylidène (PVDS), une matière acrylique ou un gel de telles matières.

6. Dispositif de transport (10) selon l'une quelconque des revendications précédentes, **caractérisé en ce que**
- l'au moins une mâchoire (22) formée en une matière électriquement contractile est mise en contact électriquement à l'aide de deux électrodes (26, 28).

7. Dispositif de transport (10) selon l'une quelconque des revendications précédentes, **caractérisé par**
- une première et une deuxième zones de contact (14, 16) électriques, la première et la deuxième zones de contact (14, 16) électriques étant électriquement reliées avec l'au moins une mâchoire (22) formée en une matière électriquement contractile.

8. Dispositif de transport (10) selon la revendication 7, **caractérisé en ce que**
- la première et la deuxième zones de contact (14, 16) électriques - sont conçues sous la forme de rubans conducteurs d'électricité entourant horizontalement le dispositif de transport (10).

9. Système de distribution d'échantillons (100), comportant :
- un nombre de dispositifs de transport (10) selon l'une quelconque des revendications précédentes,
- une surface de transport (105) qui est conçue pour porter le dispositif de transport (10),
- un nombre d'actionneurs (110) électromagnétiques qui sont placés de manière stationnaire sous la surface de transport (105), les actionneurs (110) électromagnétiques étant conçus pour déplacer un dispositif de transport (10) qui est placé sur la surface de transport (105) par l'exercice d'une force magnétique sur le dispositif de transport (10) et
- un système de commande (300) qui est conçu pour amorcer les actionneurs (110) électromagnétiques de telle sorte qu'un dispositif de transport (10) concerné se déplace sur la surface de transport (105), le long d'une trajectoire prédéfinissable.

10. Système de distribution d'échantillons (100) selon la revendication 9, **caractérisé par**
- un poste de manipulation (200) amorcé à l'aide du système de commande (300) pour charger et/ou décharger un dispositif de transport (10), comportant :
- un premier et un deuxième contacts électriques (210, 212) pour établir une liaison électrique avec le dispositif de transport (10) et
- un grappin (220) pour manipuler un récipient d'échantillons (230) réceptionné ou qui doit être réceptionné dans le dispositif de transport (10).

11. Système de distribution d'échantillons selon la revendication 10, **caractérisé en ce que** le système de commande (300) est conçu pour
- déplacer vers le poste de manipulation (200), par amorçage des actionneurs (110) électromagnétiques, un dispositif de transport (10) dans lequel est réceptionné un récipient d'échantillons (230) qui doit être déchargé,
- amorcer le grappin (220) de telle sorte que le récipient d'échantillons (230) soit tenu par le grappin (220),
- soumettre à une tension de commande et/ou à un courant de commande l'au moins une mâchoire (22) formée dans une matière électriquement contractile du dispositif de transport (10) et
- amorcer le grappin (220) de telle sorte que le récipient d'échantillons (230) soit prélevé hors du dispositif de transport (10).

12. Système de distribution d'échantillons selon la revendication 10 ou la revendication 11, **caractérisé en ce que** le système de commande (300) est conçu pour
- déplacer vers le poste de manipulation (200), par amorçage des actionneurs (110) électromagnétiques, un dispositif de transport (10) qui doit être chargé avec un récipient d'échantillons (230),
- soumettre à une tension de commande et/ou à un courant de commande l'au moins une mâchoire (22) formée dans une matière électriquement contractile du dispositif de transport (10),
- amorcer le grappin (220) de telle sorte que le récipient d'échantillons (230) soit introduit par le grappin (220) dans la zone de réception (30),
- désactiver la tension de commande et/ou le courant de commande et
- amorcer le grappin (220) de telle sorte qu'il libère le récipient d'échantillons (230).

13. Système d'automatisation de laboratoire, comportant :
- un nombre de postes de pré-analyse, d'analyse et/ou de post-analyse qui sont conçus pour traiter des récipients d'échantillons et/ou des échantillons qui sont contenus dans les récipients d'échantillons et
- un système de distribution d'échantillons destiné à transporter les récipients d'échantillons entre les postes de pré-analyse, d'analyse et/ou de post-analyse selon l'une quelconque des revendications 9 à 12.
